# EUROPÄISCHE PATENTANMELDUNG

(11) **EP 3 520 940 A1**
(43) Veröffentlichungstag der Anmeldung: **07.08.2019**
(21) Anmeldenummer: 19153738.0
(22) Anmeldetag: 25.01.2019
(51) Int. Cl.: B23C 5/10, B23C 3/00

(54) **FRÄSWERKZEUG**

(30) Priorität: 26.01.2018 LU 100689
(71) Anmelder: Datron AG, 64367 Mühltal-Traisa (DE)
(72) Erfinder: Böck, Benjamin, 64395 Brensbach (DE)
(74) Vertreter: Habermann Intellectual Property Partnerschaft von Patentanwälten mbB

(57) **Zusammenfassung**

Bei einem Fräswerkzeug (1) mit einem Befestigungsabschnitt (6) und mit einem Fräsabschnitt (5), die entlang einer Längsachse (4) des Fräswerkzeugs (1) angeordnet sind, wobei der Fräsabschnitt (5) mindestens eine sich in Richtung der Längsachse (4) mindestens abschnittsweise über den Fräsabschnitt (5) erstreckende Umfangsschneide (2) mit einem an eine Schneidkante (7) der Umfangsschneide (2) angrenzenden Spankanal (8) aufweist, ist der radiale Abstand der Schneidkante (7) zu der Längsachse (4) in Abhängigkeit von einer vorgegebenen Kompensationsdrehzahl derart vorgegeben, dass bei einer Rotation des Fräswerkzeugs (1) mit der Kompensationsdrehzahl eine durch die rotierende Schneidkante (7) gebildete Mantelfläche kreiszylinderförmig ist.

## Beschreibung

Die Erfindung betrifft ein Fräswerkzeug mit einem Befestigungsabschnitt und mit einem Fräsabschnitt, die entlang einer Längsachse des Fräswerkzeugs angeordnet sind, wobei der Fräsabschnitt mindestens eine sich in Richtung der Längsachse mindestens abschnittsweise über den Fräsabschnitt erstreckende Umfangsschneide mit einem an einer Schneidkante der Umfangsschneide angrenzenden Spankanal aufweist.

Fräswerkzeuge, die für eine formgebende Bearbeitung von festen Werkstoffen verwendet werden können, sind in zahlreichen verschiedenen Ausführungsformen und Varianten bekannt. Die Fräswerkzeuge weisen üblicherweise eine Schneide oder mehrere Schneiden auf, die entweder einstückig an dem Fräswerkzeug ausgebildet sind oder gesondert hergestellt und nachträglich mit einem Grundkörper des Fräswerkzeugs verbunden werden können. Die Schneiden treten bei einer Rotationsbewegung des Fräswerkzeugs um eine üblicherweise mit der Längsachse des Fräswerkzeugs zusammenfallenden Rotationsachse mit einem zu bearbeitenden Werkstück in Eingriff, wodurch Material von dem Werkstück abtrennt und entfernt werden kann.

Es sind Fräswerkzeuge mit einer oder mit mehreren Stirnschneiden bekannt, die sich an einer Stirnseite jeweils quer zu einer Rotationsachse des Fräswerkzeugs erstrecken. Fräswerkzeuge mit einer oder mit mehreren Stirnschneiden eignen sich vor allem dazu, in Längsrichtung in ein zu bearbeitendes Werkstück einzutauchen und eine durch einen Durchmesser des Fräswerkzeugs vorgegebenen Bohrung zu erzeugen.

Fräswerkzeuge mit einer sich entlang der Längsachse erstreckenden Umfangsschneide können quer zu der Längsachse, um welche das Fräswerkzeug während dessen Nutzung üblicherweise rotiert, verlagert werden und dabei mit jeder Umdrehung der Umfangsschneide Material in Form von Spänen von dem zu bearbeitenden Werkstück abtragen. Die Späne werden dabei entlang der Längsachse durch den an eine Schneidkante der Umfangsschneide angrenzenden Spankanal von dem zu bearbeitenden Werkstück abtransportiert. Je länger sich die Umfangsschneide längs des Fräsabschnitts von einer Stirnseite des Fräswerkzeugs in Richtung des Befestigungsabschnitts erstreckt, umso tiefer kann das Fräswerkzeug in das zu bearbeitende Werkstück eintauchen und umso größere Werkstückeabschnitte können in einem Arbeitsschritt gefertigt werden. Viele Fräswerkzeuge weisen sowohl eine Stirnschneide als auch mindestens eine Umfangsschneide auf.

Fräswerkzeuge mit zwei oder mehreren Umfangsschneiden, die in Umfangsrichtung des Fräswerkzeugs beabstandet zueinander angeordnet sind, benötigen üblicherweise für jede Umfangsschneide einen zugeordneten Spankanal, dessen Verlauf entlang der Längsachse dem Verlauf der Umfangsschneide folgt. Das im Hinblick auf den Abtransport des abgetrennten Materials möglichst groß angestrebte Nutzvolumen der Spankanäle wird in der Praxis durch Anforderungen an die Festigkeit des Fräswerkzeugs begrenzt. Jeder Spankanal stellt eine sich entlang der Längsachse des Fräswerkzeugs erstreckende Ausnehmung dar, durch welche die Festigkeit des Fräswerkzeugs geschwächt wird und durch welche die für einen Fräsvorgang relevanten Parameter wie beispielsweise die Drehzahl und Verlagerungsgeschwindigkeit des Fräswerkzeugs begrenzt werden.

Es sind auch Fräswerkzeuge bekannt, die nur eine sich entlang der Längsachse erstreckende Umfangsschneide aufweisen und deshalb als Einschneiden-Fräswerkzeuge bezeichnet werden. Da in dem Befestigungsabschnitt lediglich eine Umfangsschneide mit einem angrenzenden Spankanal angeordnet ist, erlauben Einschneiden-Fräswerkzeuge die Ausbildung einer vergleichsweise großvolumigen Ausnehmung für den Spankanal, ohne dadurch übermäßige Beschränkungen hinsichtlich der möglichen mechanischen Beanspruchung des Fräswerkzeugs während eines Fräsvorgangs aufzuerlegen.

Für verschiedene Anwendungen wird es als vorteilhaft erachtet, dass das Fräswerkzeug mit einer hohen Drehzahl von beispielsweise 20.000 Umdrehungen pro Minute oder mehr rotiert. Mittlerweile sind bereits deutlich höhere Drehzahlen von 40.000 oder 60.000 Umdrehungen pro Minute und in einigen Fällen auch darüber hinaus erreicht worden. Es hat sich gezeigt, dass bei derart hohen Drehzahlen sehr hohe Zeitspannvolumina und Oberflächenqualitäten bei dem zu bearbeitenden Werkstück erreicht werden können und gleichzeitig der damit einhergehende Verschleiß des Fräswerkzeugs äußerst gering ist.

Allerdings führen bei hohen Drehzahlen des rotierenden Fräswerkzeugs bereits kleinste Unwuchten des Fräswerkzeugs zu einer erheblichen Beeinträchtigung des Fräsvorgangs. Dabei bewirkt eine ungleichmäßige Masseverteilung in einem eine Unwucht aufweisenden Fräswerkzeug einen stark erhöhten Lärmpegel während eines Fräsvorgangs sowie eine übermäßige Zunahme des Verschleißes, und zwar sowohl des Fräswerkzeugs selbst als auch der Werkzeugaufnahme, mit welcher das Fräswerkzeug mit dessen Befestigungsabschnitt in der Fräsmaschine gelagert ist.

Um diese nachteiligen Auswirkungen zu reduzieren ist es aus der Praxis bekannt, dass insbesondere Fräswerkzeuge, die für Fräsvorgänge mit hohen Umdrehungszahlen ausgelegt sind, nach Möglichkeit gewuchtet ausgebildet sind, um die nachteiligen Auswirkungen einer Unwucht bei hohen Umdrehungszahlen zu reduzieren. Dabei sind statische oder dynamische Wuchtverfahren bekannt, mit denen entweder die Masseverteilung des Fräswerkzeugs über dessen gesamte Erstreckung entlang der Längsachse hinweg insgesamt betrachtet und optimiert wird, oder aber für jeden einzelnen Abschnitt entlang der Längsachse eine optimiert und möglichst gleichmäßige Masseverteilung vorgegeben wird. Es hat sich gezeigt, dass eine Unwucht des Fräswerkzeugs, die durch die angestrebte Anordnung der einen oder mehreren Schneiden und die dadurch vorgegebene Formgebung des Fräswerkzeugs bedingt ist, in vielen Fällen nur mit einem erheblichen Aufwand reduziert werden kann. Insbesondere bei Einschneiden-Fräswerkzeugen mit einer einzigen Umfangsschneide und einem sich entlang der Schneidkante erstreckenden Spankanal lässt sich eine durch die unsymmetrische Anordnung der Umfangsschneiden vorgegebene Unwucht oftmals nicht vollständig vermeiden. Auch bei mehrschneidigen Fräswerkzeugen, deren Schneidkanten nicht gleichmäßig in Umfangsrichtung verteilt angeordnet sind, tritt oftmals eine Unwucht auf.

Es hat sich gezeigt, dass neben den bereits bekannten Beeinträchtigungen wie beispielsweise vermehrte Lärmerzeugung und größerer Verschleiß auch die Bearbeitungspräzision beeinträchtigt wird. So weist beispielsweise ein Einschneiden-Fräswerkzeug in einem der Schneidkante und dem Spankanal gegenüberliegenden Umfangsbereich mehr Masse als in dem Umfangsbereich auf, in welchem der Spankanal angeordnet ist. Bei hohen Drehzahlen wirkt sich die dann nicht mehr gleichmäßig in alle radialen Richtungen gerichtete Zentrifugalkraft dahingehend aus, dass die Schneidkante auf Grund der auf der gegenüberliegenden Seite stärker wirkenden Zentrifugalkraft ausgelenkt wird, sodass sich der radiale Abstand der Schneidkante zu der Längsachse des Fräswerkzeugs verringert. Die Schneidkante der Umfangsschneide, die bei deren Herstellung entlang der Längsachse des Fräswerkzeugs einen gleichbleibenden radialen Abstand zu der Längsachse aufweist, wird während eines Fräsvorgangs bei hohen Drehzahlen durch die Zentrifugalkraft ausgelenkt, so dass sich auf Grund des verringerten radialen Abstands der Schneidkante zu der Rotationsachse eine in Richtung der Rotationsachse gekrümmte Fräskontur bzw. Schneidkontur ergibt. Dieser Konturfehler kann beispielsweise bei einer ebenflächig angestrebten Wandfläche, die mit einem Fräswerkzeug mit einer sich über mehrere Zentimeter erstreckenden Umfangsschneide erzeugt wird, durchaus in der Größenordnung von etwa 0,1 mm oder mehr sein. Diese unerwünschte Auslenkung der Schneidkante während eines Fräsvorgangs bei hohen Drehzahlen nimmt zudem mit einer zunehmenden Länge des Fräsabschnitts und mit der damit einhergehenden unsymmetrischen Masseverteilung des Fräswerkzeugs zu. Bei Fräswerkzeugen mit einem langen Fräsabschnitt bzw. mit einer sich über einen großen Abschnitt entlang der Längsachse erstreckenden Umfangsschneide, wie es für eine rasche Zerspanung und Bearbeitung von Oberflächen von Werkstücken vorteilhaft ist, wird die durch die Unwucht bewirkte unerwünschte Auslenkung der Schneidkante mit zunehmendem Abstand von dem Befestigungsabschnitt größer und kann zu einer erheblichen Beeinträchtigung der mit diesem Fräswerkzeug maximal erreichbaren Bearbeitungspräzision führen.

Diese unerwünschte Auslenkung der Schneidkante während der Rotation des Fräswerkzeugs wird in der Praxis auch als Flugkreisfehler bezeichnet und beschreibt die Abweichung der rotierenden Schneidkante von dem während der Rotationsbewegung für jeden Abschnitt entlang der Längsachse vorgesehenen Flugkreis.

Es wird als eine Aufgabe der vorliegenden Erfindung angesehen, die unerwünschten Auswirkungen einer während einer Rotationsbewegung verursachten Auslenkung der Schneidkante zu reduzieren, um eine möglichst präzise Bearbeitung eines Werkstücks zu ermöglichen.

Diese Aufgabe wird erfindungsgemäß dadurch gelöst, dass der radiale Abstand der Schneidkante zu der Längsachse in Abhängigkeit von einer vorgegebenen Kompensationsdrehzahl, bei der eine radiale Auslenkung der Schneidkante des Fräswerkzeugs verglichen mit dem nicht rotierenden Fräswerkzeug erfolgt, derart vorgegeben ist, dass bei einer Rotation des Fräswerkzeugs mit der Kompensationsdrehzahl eine durch die rotierende Schneidkante gebildete Mantelfläche kreiszylinderförmig ist. Im Gegensatz dazu weist das nicht rotierende Fräswerkzeug entlang der Längsachse keinen gleichbleibenden Abstand der Schneidkante zu der Längsachse auf. Auf diese Weise kann erreicht werden, dass bei einem Fräsvorgang, bei welchem das Fräswerkzeug mit der Kompensationsdrehzahl rotiert, die von der rotierenden Schneidkante gebildete Schneidkontur über die gesamte Erstreckung der Schneidkante entlang der Längsachse einen gleichbleibenden Abstand zu der Längsachse und einen parallel zu dieser Längsachse gradlinigen Verlauf aufweist. Wird das Fräswerkzeug mit einer von der Kompensationsdrehzahl geringfügig abweichenden Drehzahl verwendet, ist die von der Zentrifugalkraft während der Rotation bewirkte Abweichung der Schneidkante von der bei der Kompensationsdrehzahl kreiszylinderförmigen Mantelfläche vergleichsweise gering und oftmals für die Bearbeitung des Werkstücks mit der angestrebten Präzision nicht mehr relevant. Die Kompensationsdrehzahl kann eine hohe Drehzahl sein, wie sie üblicherweise für einen Fräsvorgang mit einem vergleichbaren Fräswerkzeug möglich ist oder in der Praxis vorgegeben wird. Auf diese Weise kann vermieden werden, dass bei Fräswerkzeugen mit einer Unwucht die bei hohen Drehzahlen erzeugten Oberflächen eine unerwünschte Krümmung aufweisen, die mit zunehmendem Abstand der Schneidkante zu dem Befestigungsabschnitt des Fräswerkzeugs zunimmt und insbesondere bei Werkzeugoberflächen mit Abmessungen im Bereich von mehreren Zentimetern und mehr eine ganz erhebliche Reduzierung der Maßgenauigkeit bei dem Fräsvorgang bewirkt.

Als Längsachse wird dabei eine Rotationsachse bezeichnet, um welche das Fräswerkzeug in dem Befestigungsabschnitt rotiert, wenn das Fräswerkzeug mit dem Befestigungsabschnitt in einer Werkzeugspindel einer Fräsmaschine gelagert ist und über die Werkzeugspindel in Rotation versetzt wird. Die Längsachse des Fräswerkzeugs entspricht in vielen Fällen zumindest in dem Befestigungsabschnitt auch einer Mittenachse des Fräswerkzeugs. Bei einer langsamen Rotationsbewegung entspricht die Längsachse auch im Bereich des Fräsabschnitts im Wesentlichen der Rotationsachse.

Eine derartige Anpassung des radialen Abstands der Schneidkante entlang der Längsachse ist insbesondere für Einschneiden-Fräswerkzeuge relevant, die eine einzige sich in Richtung der Längsachse mindestens abschnittsweise über den Fräsabschnitt erstreckende Umfangsschneide aufweisen. Durch die eine Umfangsschneide und den dieser Umfangsschneide zugeordneten Spankanal, die beide notwendigerweise nicht symmetrisch bezüglich der Längsachse angeordnet sein können, weisen Einschneiden-Fräswerkzeuge konstruktionsbedingt eine Unwucht auf. Diese Unwucht führt insbesondere bei großen Durchmessern des Fräswerkzeugs von beispielsweise 4 mm und mehr und bei hohen Drehzahlen zu einer erheblichen Beeinträchtigung des Fräsvorgangs und zu einer unerwünschten Reduzierung der maximal erreichbaren Präzision bei der Werkstückbearbeitung. Auch bei Fräswerkzeugen mit mehreren Umfangsschneiden, die jedoch nicht gleichmäßig oder nicht symmetrisch relativ zu der Längsachse ausgebildet sind, oder bei denen der jeweils einer Umfangsschneide zugeordnete Spankanal eine unterschiedliche Formgebung aufweist, können störende Unwuchten auftreten, die zu einer unerwünschten Auslenkung der betreffenden Schneidkanten führen können.

Einer vorteilhaften Ausgestaltung des Erfindungsgedankens zufolge ist vorgesehen, dass der radiale Abstand der Schneidkante mit zunehmendem Abstand von dem Befestigungsabschnitt kontinuierlich zunimmt oder kontinuierlich abnimmt. Die während einer Rotationsbewegung auf das Fräswerkzeug einwirkenden Zentrifugalkräfte führen dazu, dass das Fräswerkzeug verbogen wird und die unerwünschte Auslenkung der Schneidkante mit zunehmendem Abstand von dem Befestigungsabschnitt größer wird. Durch einen kontinuierlich zunehmenden bzw. abnehmenden radialen Abstand der Schneidkante kann diese unerwünschte Auslenkung in geeigneter Weise kompensiert werden.

Ein kontinuierlich zunehmender Abstand ist beispielsweise bei Einschneiden-Fräswerkzeugen vorteilhaft, bei denen ein großer Spankanal unmittelbar neben einer Schneidkante dazu führt, dass im Bereich der Schneidkante weniger Masse als in einem gegenüberliegenden Umfangsbereich angeordnet ist. Ein kontinuierlich abnehmender Abstand ist bei Fräswerkzeuggeometrien zweckdienlich und für eine Kompensation erforderlich, bei denen im Bereich der Schneidkante eine größere Massenansammlung als in einem gegenüberliegenden Umfangsbereich des Fräswerkzeugs ist. Es ist ebenfalls möglich, dass eine große Unwucht des Fräswerkzeugs in einem entlang der Längsachse zu der Schneidkante axial beabstandeten Bereich eine rotationsbedingte Verformung des Fräswerkzeugs im Bereich der Schneidkante verursacht, der durch eine entsprechende Korrektur des Verlaufs bzw. des radialen Abstands der Schneidkante korrigiert und kompensiert werden kann.

Eine einfache und kostengünstig durchführbare konstruktive Maßnahme, um die unerwünschte Auslenkung der Schneidkante während einer Rotationsbewegung zumindest zu verringern, kann gemäß einer vorteilhaften Ausgestaltung des Erfindungsgedankens dadurch erreicht werden, dass der radiale Abstand der Schneidkante mit zunehmendem Abstand von dem Befestigungsabschnitt in Richtung einer Stirnseite des Fräswerkzeugs proportional zu diesem Abstand zunimmt bzw. abnimmt. Eine derartige Formgebung des Fräsabschnitts des Fräswerkzeugs kann in einfacher Weise und ohne großen Aufwand vorgegeben werden. Dennoch wird durch einen derartigen Verlauf der Schneidkante eine für viele Anwendungsbereiche bereits vorteilhafte bzw. ausreichende Reduzierung der unerwünschten Auslenkungen der Schneidkante während der Rotationsbewegung ermöglicht.

Der Einfluss des radialen Abstands der Schneidkante zu der Längsachse und die erfindungsgemäße Ausgestaltung eines Schneidkantenverlaufs, der entlang der Längsachse einen unterschiedlichen radialen Abstand zu der Längsachse aufweist, kann in vorteilhafter Weise auch zur Herstellung einer Wandfläche eines Werkstücks mit vorgegebenen geometrischen Eigenschaften verwendet werden. Die Erfindung betrifft deshalb auch ein Verfahren zur Herstellung einer in Längsrichtung eines Fräswerkzeugs konvex oder konkav gekrümmten Wandfläche eines Werkstücks, wobei das mit einer vorgegebenen Drehzahl rotierende Fräswerkzeug mit den vorangehend beschriebenen Merkmalen relativ zu dem Werkstück derart verlagert wird, dass die rotierende Umfangsschneid des Werkzeugs die Wandfläche erzeugt. Erfindungsgemäß ist dabei vorgesehen, dass zur Herstellung einer relativ zu dem Werkstück konvex gekrümmten Wandfläche die Drehzahl des rotierenden Fräswerkzeugs kleiner als die Kompensationsdrehzahl des Fräswerkzeugs vorgegeben wird und dass zur Herstellung einer relativ zu dem Werkstück konkav gekrümmten Wandfläche die Drehzahl des rotierenden Fräswerkzeugs größer als die Kompensationsdrehzahl vorgegeben wird. Erfindungsgemäß kann die Abhängigkeit der durch die Zentrifugalkraft erzwungenen Auslenkung der Schneidkante von der jeweiligen Drehzahl des rotierenden Fräswerkzeugs dazu verwendet und ausgenutzt werden, die sich bei einer Rotation ergebende Schneidkontur der Schneidkante durch die Vorgabe einer geringen oder hohen Drehzahl zu beeinflussen. Wenn das Fräswerkzeug mit einer geringeren Drehzahl als der Kompensationsdrehzahl rotiert, wird die radial nach außen vorspringende Schneidkante weniger als bei der Kompensationsdrehzahl zu der Längsachse hin und damit zu einem kleineren radialen Abstand verlagert. Dies führt dazu, dass mit zunehmendem Abstand der Schneidklinge von dem Befestigungsabschnitt die Schneidkante radial nach außen vorspringt und mit zunehmendem Abstand von dem Befestigungsabschnitt tiefer in das zu bearbeitende Werkstück eindringt. Die bei einer quer zu der Längsrichtung erzeugte Trennfläche bzw. Wandfläche des Werkstücks weist dann eine konvexe Krümmung auf. Ein auf diese Weise erzeugter Hinterschnitt kann für verschiedene Anwendungen oder Produkte vorteilhaft sein.

Wird die Drehzahl größer als die Kompensationsdrehzahl vorgegeben, so bewirken die während der Drehbewegung auf den Fräsabschnitt des Fräswerkzeugs wirkenden Zentrifugalkräfte eine stärkere Auslenkung der Schneidkante als durch den zunächst größeren radialen Abstand der Schneidkante zur Längsachse vorgegebenen Wert, so dass die Schneidkante während der Rotationsbewegung mit zunehmendem Abstand von dem Befestigungsabschnitt zunehmend zur Längsachse hin ausgelenkt wird. Bei einer Verlagerung des rotierenden Fräswerkzeugs quer zu der Längsachse wird bei dem mit dem Fräswerkzeug in Eingriff stehenden Werkstück eine konkav gekrümmte Wandfläche erzeugt. Mit dem Fräswerkzeug können auch bei Drehzahlen, die größer als die Kompensationsdrehzahl sind, Sacklochbohrungen in dem Werkstück erzeugt werden, deren Durchmesser mit zunehmender Eintauchtiefe des Fräswerkzeugs abnimmt.

Es ist gemäß einer optionalen Ausgestaltung des Erfindungsgedankens ebenfalls denkbar und für verschiedene Anwendungen vorteilhaft, dass zur Herstellung einer in Längsrichtung geradlinig verlaufenden Wandfläche eines Werkstücks die Drehzahl des rotieren Fräswerkzeugs geringer als die Kompensationsdrehzahl vorgegeben wird und das Fräswerkzeug in Längsrichtung relativ zu der zu bearbeitenden Wandfläche verlagert wird, so dass während des Fräsvorgangs jeweils nur ein an eine Stirnseite des Fräswerkzeugs angrenzender Teilabschnitt der Umfangsschneide mit dem Werkstück in Eingriff tritt. Auf diese Weise kann der bei der Herstellung einer geradlinig verlaufenden Wandfläche auftretende Verschleiß des Fräswerkzeugs auf einen an die Stirnseite des Fräswerkzeugs angrenzenden Teilabschnitt der Umfangsschneide beschränkt werden. Durch eine ausreichend große Anzahl von Verlagerungsschritten, mit welchen das Fräswerkzeug schrittweise tiefer in das zu bearbeitende Werkstück eintaucht, kann eine im Wesentlichen geradlinig verlaufende Wandfläche erzeugt werden, bei der die zwischen zwei Eintauchtiefen verbleibende geringfügige Krümmung der Wandfläche nicht mehr wahrgenommen oder zumindest nicht als störend empfunden wird.

Nachfolgend werden verschiedene Aspekte des erfindungsgemäßen Fräswerkzeugs und dessen Verwendung in den exemplarisch dargestellten Ausführungsbeispielen näher erläutert. Es zeigt:

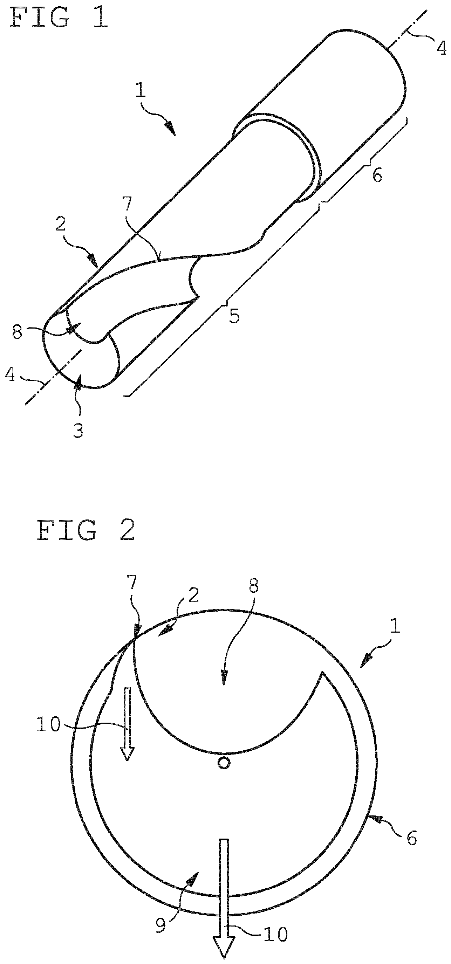

Fig. 1 eine schematische und perspektivische Ansicht eines Fräswerkzeugs mit einer Umfangsschneide,
Fig. 2 eine Ansicht des in Fig. 1 dargestellten Fräswerkzeugs auf eine Stirnseite des Fräswerkzeugs,

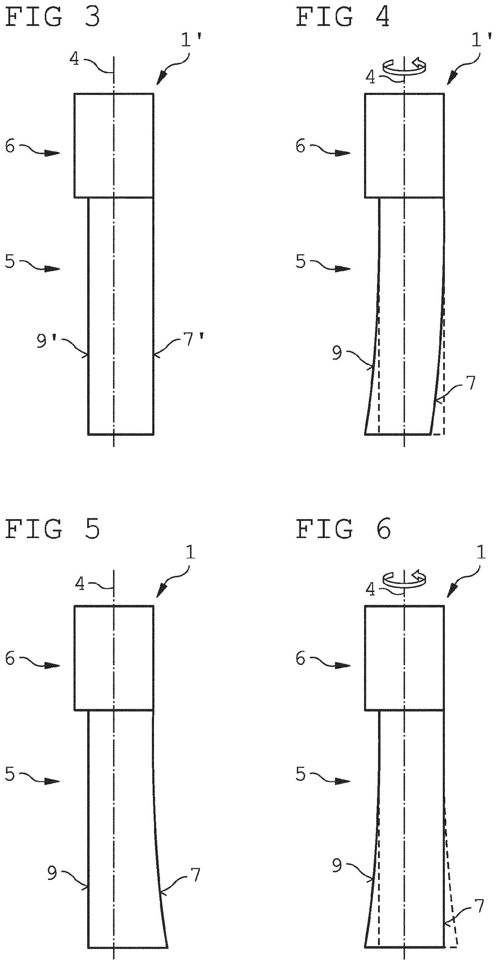

Fig. 3 eine schematische Darstellung des radialen Abstands der Schneidkante eines herkömmlichen Fräswerkzeugs (rechte Seite einer strichpunktiert eingezeichneten Längsachse) und des radialen Abstands eines der Schneidkante gegenüberliegenden Umfangsbereichs des Fräswerkzeugs (linke Seite), wobei das Fräswerkzeug nicht rotiert,
Fig. 4 eine schematische Darstellung des radialen Abstands der Schneidkante zu der Längsachse (rechte Seite) und des radialen Abstands des gegenüberliegenden Umfangsbereichs (linke Seite) des herkömmlichen Fräswerkzeugs während einer Rotationsbewegung, wobei zur Verdeutlichung die jeweilige Kontur der Schneidkante und des gegenüberliegenden Umfangsbereichs bei einem Stillstand des Fräswerkzeugs gestrichelt angedeutet sind,
Fig. 5 den radialen Abstand der Schneidkante eines erfindungsgemäß ausgestalteten Fräswerkzeugs (rechte Seite) und den radialen Abstand eines gegenüberliegenden Umfangsbereichs (linke Seite), wenn das Fräswerkzeug stillsteht,
Fig. 6 den radialen Abstand der Schneidkante relativ zu der Längsachse (rechte Seite) und den radialen Abstand des gegenüberliegenden Umfangsbereichs (linke Seite) während einer Rotationsbewegung des erfindungsgemäßen Fräswerkzeugs, wobei zur Verdeutlichung die jeweilige Kontur der Schneidkante und des gegenüberliegenden Umfangsbereichs bei einem Stillstand des Fräswerkzeugs gestrichelt angedeutet sind,

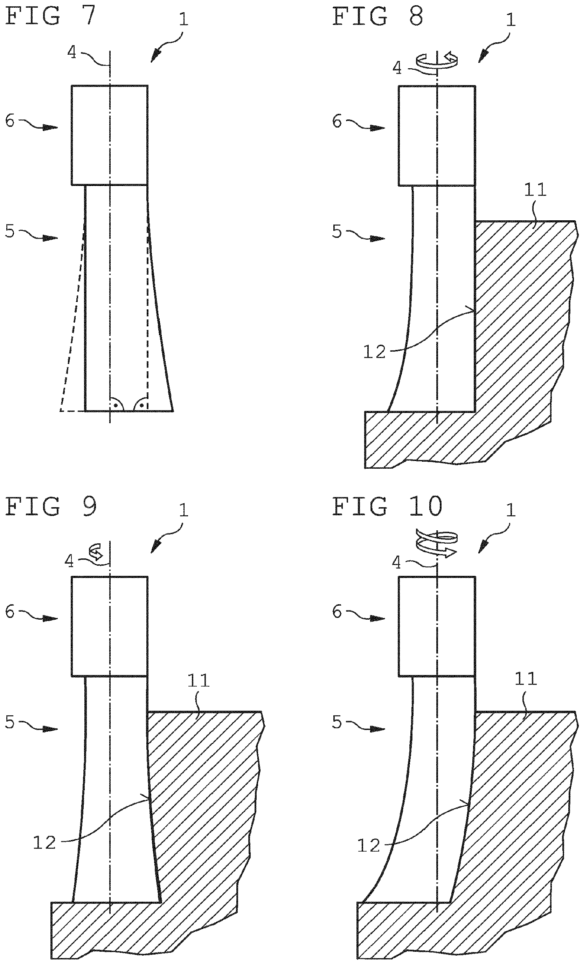

Fig. 7 eine schematische Darstellung eines erfindungsgemäßen Fräswerkzeugs, bei dem der radiale Abstand der Schneidkante bei einer vorab festgelegten Kompensationsdrehzahl so vorgegeben ist, dass die bei einem stillstehenden Fräswerkzeug zunehmend radial vorspringende Schneide (durchgezogene Linie) bei einer Rotationsbewegung mit der Kompensationsdrehzahl einen konstanten radialen Abstand zu der Längsachse aufweist (gestrichelte Linie),
Fig. 8 eine schematische Darstellung eines Fräsvorgangs, bei welchem das in Fig. 7 dargestellte Fräswerkzeug mit der Kompensationsdrehzahl rotiert und dabei eine parallel zu der Längsachse des Fräswerkzeugs geradlinig verlaufende Wandfläche eines Werkstücks erzeugt,
Fig. 9 eine schematische Darstellung eines Fräsvorgangs mit dem in Fig. 7 dargestellten Fräswerkzeug, wobei das Fräswerkzeug mit einer geringeren Drehzahl als der Kompensationsdrehzahl rotiert und dadurch eine in Richtung der Längsachse des Fräswerkzeugs konvex gekrümmte Wandfläche in dem Werkstück erzeugt wird, und
Fig. 10 eine schematische Darstellung eines Fräsvorgangs mit dem in Fig. 7 dargestellten Fräswerkzeug, das mit einer größeren Drehzahl als der Kompensationsdrehzahl rotiert und dadurch eine in Richtung der Längsachse des Fräswerkzeugs konkav gekrümmte Wandfläche in dem Werkstück erzeugt.

Ein in den Figuren 1 und 2 schematisch dargestelltes Fräswerkzeug 1 weist eine einzige Umfangsschneide 2 auf, die sich ausgehend von einer Stirnseite 3 des Fräswerkzeugs entlang einer Längsachse 4 über einen Fräsabschnitt 5 hinweg bis zu einem daran angrenzenden Befestigungsabschnitt 6 des Fräswerkzeugs erstreckt. Der Befestigungsabschnitt 6 des Fräswerkzeugs 1 ist so ausgestaltet, dass das Fräswerkzeug 1 in einer nicht dargestellten Spindel einer Fräsmaschine aufgenommen und festgelegt werden kann. Das Fräswerkzeug 1 kann über die Spindel in Rotation versetzt werden und während einer Rotation um die Längsachse 4 mit hoher Drehzahl sowohl entlang der Längsachse 4 als auch quer zu der Längsachse 4 verfahren werden.

Die Umfangsschneide 2 weist eine an der Stirnseite beginnende und sich schraubenförmig bis zu dem Befestigungsabschnitt 6 erstreckende Schneidkante 7 auf. An die Schneidkante 7 angrenzend verläuft dem schraubenförmigen Verlauf der Schneidkante 7 folgend ein Spankanal 8, der durch eine näherungsweise halbkreisförmige und sich in radialer Richtung bis in die Nähe der Längsachse 4 erstreckende Ausnehmung in dem Fräsabschnitt 5 gebildet wird. Der Spankanal 8 erstreckt sich ebenfalls entlang der Längsachse 4 bis zu dem Befestigungsabschnitt 6. Es sind auch Fräswerkzeuge 1 mit einem hiervon abweichenden Verlauf der Schneidkante 7 denkbar, beispielsweise ein in Umfangsrichtung gleichbleibender, konstanter Verlauf der Schneidkante 7 entlang der Längsachse 4. Das Fräswerkzeug 1 könnte auch mehrere Umfangsschneiden 2 aufweisen, die beispielsweise nicht symmetrisch zueinander angeordnet sind oder verlaufen, sodass auch bei zwei oder mehr als zwei Umfangsschneiden 2 eine Unwucht erzeugt wird.

Durch den neben der Schneidkante 7 verlaufenden Spankanal 8 wird die in radialer Richtung senkrecht zur Längsachse 4 vorgegebene Masseverteilung in dem Befestigungsabschnitt 6 erkennbar unsymmetrisch, sodass eine Unwucht erzeugt wird. Bei einer Rotationsbewegung des Fräswerkzeugs 1 um dessen Längsachse 4 wirkt die nach außen gerichtete Zentrifugalkraft in einem dem Spankanal 8 gegenüberliegenden Umfangsbereich 9 auf Grund der größeren Masse stärker auf den betreffenden Abschnitt des Fräswerkzeugs 1 als in dem Bereich des Spankanals 8, in dem auf Grund der durch die Ausnehmung des Spankanals 8 reduzierten Masse des Fräswerkzeugs 1 lediglich eine geringere Zentrifugalkraft wirkt. Daraus ergibt sich eine in Figur 2 mit einem Pfeil 10 schematisch angedeutete resultierende Zentrifugalkraft, welche das Fräswerkzeug 1 in diesem Abschnitt verbiegt und auslenkt, wodurch die Schneidkante 7 zu dem gegenüberliegenden Umfangsbereich hin verlagert wird und sich der radiale Abstand der Schneidkante 7 zu der Längsachse 4 verringert.

In den Figuren 3 und 4 ist der Einfluss der Zentrifugalkraft auf ein herkömmliches Fräswerkzeug 1' schematisch dargestellt. Dabei ist ebenso wie in den nachfolgenden Figuren jeweils entlang der Längsachse 4 eine Projektion des radial äußeren Verlaufs einer Schneidkante 7' auf einer rechten Seite der Längsachse 4 dargestellt. Auf einer linken Seite der Längsachse 4 ist eine Projektion des radial äußeren Verlaufs einer Außenfläche eines der Schneidkante 7' gegenüberliegenden Umfangsbereichs 9' dargestellt. Der jeweils dargestellte Verlauf der Schneidkante 7' entlang der Längsachse 4 entspricht bei einem rotierenden Fräswerkzeug 1' der sich ergebenden Schneidkontur bzw. Fräskontur. Bei dem in den Figuren 3 und 4 dargestellten herkömmlichen Fräswerkzeug 1' verläuft ein radialer Abstand der Schneidkante 7' bei der Herstellung bzw. bei einem stillstehenden Fräswerkzeug 1' parallel zu der Längsachse 4, da der Einfluss der Zentrifugalkraft auf das rotierende Fräswerkzeug 1' nicht berücksichtigt ist. Bei einer in Figur 4 dargestellten Rotationsbewegung des Fräswerkzeugs 1' um die Längsachse 4 wird eine ungleichmäßig auf das Fräswerkzeug 1' einwirkende Zentrifugalkraft erzeugt, die eine Auslenkung der Schneidkante 7' zu einem kleineren radialen Abstand zu der Längsachse 4 hin bewirkt. Dieser Effekt bzw. die Auslenkung der Schneidkante 7' wird mit zunehmendem Abstand von dem Befestigungsabschnitt 6 größer, sodass sich ein gekrümmter Verlauf der Schneidkontur der Schneidkante 7' entlang der Längsachse 4 einstellt und die Schneidkante 7' im Bereich der Stirnseite 3' des Fräswerkzeugs 1' die größte Auslenkung aufweist.

Den unerwünschten Auswirkungen der durch die Zentrifugalkraft verursachten Auslenkung der Schneidkante 7 kann erfindungsgemäß dadurch entgegengewirkt werden, dass die Schneidkante 7 bei dem stillstehenden Fräswerkzeug 1 keinen konstanten radialen Abstand zu der Längsachse 4 aufweist, wie es schematisch in den Figuren 5 und 6 dargestellt ist. Der radiale Abstand der Schneidkante 7 nimmt bei diesem exemplarisch dargestellten Ausführungsbeispiel allmählich beginnend von dem Befestigungsabschnitt 6 hin zu der Stirnseite 3 des Fräswerkzeugs 1 kontinuierlich zu. Im Bereich der Stirnseite 3 des Fräswerkzeugs 1 weist die Schneidkante 7 den größten radialen Abstand zu der Längsachse 4 auf. Wenn das Fräswerkzeug 1 in Rotation versetzt wird, bewirkt die Zentrifugalkraft auf Grund der in Umfangsrichtung durch den Spankanal 8 ungleichmäßigen Masseverteilung eine resultierende Auslenkung der Schneidkante 7, sodass sich der zunächst größer vorgegebene radiale Abstand der Schneidkante 7 von der Längsachse 4 verringert und sich während der Rotationsbewegung des Fräswerkzeugs 1, also bei dessen Nutzung während eines Fräsvorgangs, wieder ein zumindest näherungsweise gradliniger und parallel zu der Längsachse 4 verlaufender Verlauf der Schneidkante 7 und damit eine gradlinig verlaufende Schneidkontur, bzw. Fräskontur ergibt.

Der Verlauf der Schneidkante 7 bzw. der Verlauf des radialen Abstands der Schneidkante 7 bei einem stillstehenden Fräswerkzeug 1 kann derart vorgegeben werden, dass für eine vorab festgelegte Kompensationsdrehzahl die durch die Zentrifugalkraft bewirkte Auslenkung der Schneidkante 7 eine gradlinig verlaufende Schneidkontur ergibt.

Es ist ebenfalls möglich, durch vorab durchgeführte Versuche und Messungen für eine vorab festgelegte Kompensationsdrehzahl und für ein vorab festgelegtes Material eines Werkstücks einen Verlauf der Schneidkante 7 des Fräswerkzeugs 1 zu ermitteln, der während eines Fräsvorgangs mit der Kompensationsdrehzahl in dem betreffenden Material nicht nur die resultierende Zentrifugalkraft kompensiert, sondern auch andere Einflüsse wie beispielsweise der Schnittkraft oder der Spanabtragung etc. kompensiert, um im Ergebnis eine in Richtung der Längsachse gradlinig verlaufende Schneidkontur bzw. entsprechende Wandfläche eines Werkstücks zu erzeugen.

Die Beeinflussung des Verlaufs der Schneidkante 7 durch die Drehzahl einer Rotationsbewegung des Fräswerkzeugs 1 kann erfindungsgemäß auch dazu verwendet werden, neben einem möglichst gradlinigen Verlauf einer Wandfläche eines Werkstücks auch gezielt einen konvex oder konkav gekrümmten Verlauf der Wandfläche zu erzeugen. Ein in Figur 7 dargestelltes erfindungsgemäßes Fräswerkzeug 1 weist im Stillstand einen mit einer durchgezogenen Linie dargestellten Verlauf der Schneidkante 7 auf, der mit zunehmendem Abstand von dem Befestigungsabschnitt 6 kontinuierlich zunimmt, wobei der zunehmende radiale Abstand der Schneidkante 7 von der Längsachse 4 für eine vorab festgelegte Kompensationsdrehzahl so ermittelt und vorgegeben wurde, dass die bei einer Rotationsbewegung mit der Kompensationsdrehzahl verursachte Auslenkung der Schneidkante vollständig kompensiert wird und sich eine gradlinig verlaufende Schneidkontur einstellt, die gestrichelt dargestellt ist.

Bei einem in Figur 8 dargestellten Fräsvorgang, bei welchem das Fräswerkzeug 1 mit der Kompensationsdrehzahl rotiert, wird an einem mit dem Fräsvorgang bearbeiteten Werkstück 11 eine Wandfläche 12 erzeugt, die in Richtung der Längsachse 4 des rotierenden Fräswerkzeugs 1 einen gradlinigen Verlauf aufweist. Wenn das Fräswerkzeug 1 quer zu der Längsachse 4 verfahren wird, kann dadurch eine vollständig ebenflächige Wandfläche 12 an dem Werkstück 11 erzeugt werden.

Rotiert das Fräswerkzeug 1 während eines Fräsvorgangs mit einer geringeren Drehzahl, wie es schematisch in Figur 9 dargestellt ist, ist die durch die Zentrifugalkraft bewirkte Auslenkung der Schneidkante 7 geringer als die vorab vorgegebene Radiuszunahme des Schneidkantenverlaufs, sodass die gekrümmte Schneidkontur, wie sie in Figur 7 gezeigt ist, nicht vollständig kompensiert wird und eine dementsprechend in Richtung der Längsachse 4 konvex gekrümmte Wandfläche 12 bei dem Werkstück 11 erzeugt wird. Eine derartige Hinterschneidung kann für viele Anwendungen vorteilhaft eingesetzt werden.

In analoger Weise kann das Fräswerkzeug 1 während eines Fräsvorgangs mit einer höheren Drehzahl als der Kompensationsdrehzahl rotieren, sodass der Einfluss der Zentrifugalkraft höher ist und der zunächst gekrümmte Verlauf der Schneidkante 7 überkompensiert wird. Es ergibt sich ein bereits bei herkömmlichen Fräswerkzeugen 1' bekannter und zur Längsachse 4 hin gekrümmter Verlauf der Schneidkante 7 bzw. der Schneidkontur, bzw. eine entsprechend in Richtung der Längsachse 4 konvex gekrümmte Wandfläche 12 des Werkstücks 11.

Mit dem erfindungsgemäßen Fräswerkzeug 1 können demzufolge in Abhängigkeit von der jeweiligen Rotationsgeschwindigkeit während eines Fräsvorgangs gezielt und kontrolliert sowohl gradlinig verlaufende Wandflächen 12 als auch konvex oder konkav gekrümmte Wandflächen 12 eines Werkstücks 11 erzeugt werden, ohne dass ein Werkzeugwechsel oder beispielsweise eine Verkippung des rotierenden Fräswerkzeugs erforderlich ist.

## Patentansprüche

1. Fräswerkzeug (1) mit einem Befestigungsabschnitt (6) und mit einem Fräsabschnitt (5), die entlang einer Längsachse (4) des Fräswerkzeugs (1) angeordnet sind, wobei der Fräsabschnitt (5) mindestens eine sich in Richtung der Längsachse (4) mindestens abschnittsweise über den Fräsabschnitt (5) erstreckende Umfangsschneide (2) mit einem an eine Schneidkante (7) der Umfangsschneide (2) angrenzenden Spankanal (8) aufweist, **dadurch gekennzeichnet, dass** der radiale Abstand der Schneidkante (7) zu der Längsachse (4) in Abhängigkeit von einer vorgegebenen Kompensationsdrehzahl, bei der eine radiale Auslenkung der Schneidkante (7) des rotierenden Fräswerkzeugs (1) erfolgt, derart vorgegeben ist, dass bei einer Rotation des Fräswerkzeugs (1) mit der Kompensationsdrehzahl eine durch die rotierende Schneidkante (7) gebildete Mantelfläche kreiszylinderförmig ist.

2. Fräswerkzeug (1) nach Anspruch 1, **dadurch gekennzeichnet, dass** der radiale Abstand der Schneidkante (7) mit zunehmendem Abstand von dem Befestigungsabschnitt (6) kontinuierlich zunimmt oder abnimmt.

3. Fräswerkzeug (1) nach Anspruch 2, **dadurch gekennzeichnet, dass** der radiale Abstand der Schneidkante (7) mit zunehmendem Abstand von dem Befestigungsabschnitt (6) in Richtung einer Stirnseite (3) des Fräswerkzeugs (1) proportional zu diesem Abstand zunimmt oder abnimmt.

4. Fräswerkzeug (1) nach einem der vorausgehenden Ansprüchen, **dadurch gekennzeichnet, dass** das Fräswerkzeug (1) eine einzige sich in Richtung der Längsachse (4) mindestens abschnittsweise über den Fräsabschnitt (5) erstreckende Umfangsschneide (2) aufweist.

5. Verfahren zur Herstellung einer in Richtung einer Längsachse (4) eines Fräswerkzeugs (1) konvex oder konkav gekrümmten Wandfläche (12) eines Werkstücks (11), wobei das mit einer vorgegebenen Drehzahl rotierende Fräswerkzeug (1) gemäß einem der Ansprüche 2 bis 4 relativ zu dem Werkstück (11) derart verlagert wird, dass die rotierende Umfangsschneide (2) des Fräswerkzeugs (1) die Wandfläche (12) erzeugt, **dadurch gekennzeichnet, dass** zur Herstellung einer relativ zu dem Werkstück (11) konvex gekrümmten Wandfläche (12) die Drehzahl des rotierenden Fräswerkzeugs (1) kleiner als die Kompensationsdrehzahl des Fräswerkzeugs (1) vorgegeben wird, und dass zur Herstellung einer relativ zu dem Werkstück (11) konkav gekrümmten Wandfläche (12) die Drehzahl des rotierenden Fräswerkzeugs (1) größer als die Kompensationsdrehzahl vorgegeben wird.

6. Verfahren zur Herstellung einer in Richtung einer Längsachse (4) eines Fräswerkzeugs (1) gradlinig verlaufenden Wandfläche (12) eines Werkstücks (11), wobei das mit einer vorgegebenen Drehzahl rotierende Fräswerkzeug (1) gemäß einem der Ansprüche 2 bis 4 relativ zu dem Werkstück (11) derart verlagert wird, dass die rotierende Umfangsschneide (2) des Fräswerkzeugs (1) die Wandfläche (12) erzeugt, **dadurch gekennzeichnet, dass** zur Herstellung der gradlinig verlaufenden Wandfläche (12) die Drehzahl des rotierenden Fräswerkzeugs (1) geringer als die Kompensationsdrehzahl vorgegeben wird und dass das Fräswerkzeug (1) in Richtung der Längsachse (4) relativ zu der zu bearbeitenden Wandfläche (12) verlagert wird, sodass während des Fräsvorgangs jeweils nur ein an eine Stirnseite (3) des Fräswerkzeugs (1) angrenzender Teilabschnitt der Umfangsschneide (2) mit dem Werkstück (11) in Eingriff tritt.
